# EUROPÄISCHE PATENTSCHRIFT

(11) **EP 2 337 179 B1**
(45) Veröffentlichungstag und Bekanntmachung des Hinweises auf die Patenterteilung: **28.11.2012**
(21) Anmeldenummer: 09180097.9
(22) Anmeldetag: 21.12.2009
(51) Int. Cl.: H02J 3/38

(54) **Einspeisung elektrischer Energie von räumlich verteilten Energiequellen in ein Wechselstromnetz**
Feeding electrical energy of distributed energy sources into an alternating current network
Alimentation en énergie électrique de sources d'énergie réparties dans l'espace dans un réseau de courant alternatif

(43) Veröffentlichungstag der Anmeldung: 22.06.2011
(73) Patentinhaber: SMA Solar Technology AG, 34266 Niestetal (DE)
(72) Erfinder: Magnussen, Björn, 34131, Kassel (DE)
(74) Vertreter: Rehberg, Bernhard Frank

(56) Entgegenhaltungen:
- EP-A1- 0 591 620
- WO-A2-2009/011877
- DE-A1- 19 859 732
- US-A1- 2007 135 970
- US-A1- 2009 160 258

## Beschreibung

Die Erfindung bezieht sich auf ein Verfahren zur Einspeisung elektrischer Energie von mehreren räumlich verteilt angeordneten Energiequellen über mehrere ebenfalls räumlich verteilt angeordnete und parallel geschaltete Wechselrichter in ein Wechselstromnetz mit den Schritten des Oberbegriffs des unabhängigen Patentanspruchs 1. Weiterhin bezieht sich die Erfindung auf eine Vorrichtung zur Einhaltung mindestens eines Soll-Werts für einen physikalischen Parameter von elektrischer Energie, die an einem Übergabepunkt in ein Wechselstromnetz eingespeist wird, mit den Merkmalen des Oberbegriffs des unabhängigen Patentanspruchs 7. Die Vorrichtung soll insbesondere zur Durchführung des neuen Verfahrens geeignet sein.

Bei den Energiequellen handelt es sich insbesondere um solche von regenerativer Energie, beispielsweise um Photovoltaikanlagen und Windkraftanlagen. Diese Energiequellen zeichnen sich häufig dadurch aus, dass sie in großflächigen Feldern anzuordnen sind, um eine gewünschte Gesamteinspeiseleistung zu realisieren. Von derartigen Energiequellen kann hier jeweils eine einzige an jeden der Wechselrichter angeschlossen sein. Insbesondere bei Photovoltaikanlagen können aber auch z. B. mehrere sogenannte Strangs, die jeweils eine Reihenschaltung einer Mehrzahl von Photovoltaikmodulen sind, parallel an einen der Wechselrichter angeschlossen sein.

Das Wechselstromnetz kann ein einphasiges Wechselstromnetz aber auch ein mehrphasiges, insbesondere dreiphasiges Wechselstromnetz sein. Wenn hier von parallel geschalteten Wechselrichtern die Rede ist, können diese so parallel geschaltet sein, dass sie parallel in eine Phase des Wechselstromnetzes einspeisen. D. h., bei einem einphasigen Wechselstromnetz sind immer mehrere Wechselrichter vorhanden. Bei einem mehrphasigen Wechselstromnetz kann die Parallelschaltung auch bedeuten, dass jeweils nur ein Wechselrichter in jede der Phasen des Wechselstromnetzes einspeist. Auch bei einem mehrphasigen Wechselstromnetz sind aber in aller Regel mehrere Wechselrichter für jede Phase vorgesehen. Dabei kann jeder Wechselrichter nur in eine Phase einspeisen oder direkt einen mehrphasigen Wechselstrom ausgeben.

Wenn hier von der Einhaltung von Soll-Werten die Rede ist, so bedeutet dies vielfach, dass ein entsprechender Ist-Wert den Soll-Wert im Sinne eines oberen Grenzwerts nicht überschreitet oder im Sinne eines unteren Grenzwerts nicht unterschreitet. Der Soll-Wert kann aber auch ein Wertepaar aus einem oberen oder einem unteren Grenzwert sein, zwischen denen sich der Ist-Wert bewegen muss, um den Soll-Wert einzuhalten.

### STAND DER TECHNIK

Um die Stabilität von Wechselstromnetzen zu gewährleisten, muss ein Gleichgewicht von eingespeister und entnommener elektrischer Energie bestehen. Um dieses Gleichgewicht bei einem Überangebot an eingespeister elektrischer Energie herstellen zu können, gilt auch für Betreiber leistungsstärkerer Photovoltaik- und Windkraftanlagen, dass sie ihre Einspeiseleistung auf Anforderung des Betreibers des Wechselstromnetzes auf ein definiertes Maß reduzieren können müssen. Diese Anforderung kann in Form von Rundsteuersignalen übermittelt werden.

Um insbesondere Photovoltaikanlagen zur Reduktion der eingespeisten Leistung in Folge derartiger Rundsteuersignale zu ertüchtigen, ist das Produkt "Power Reducer Box" der Anmelderin bekannt. Hierbei handelt es sich um eine Vorrichtung, die das Rundsteuersignal von einem Rundsteuersignalempfänger erhält und in der Folge auf die Steuerungen mehrerer angeschlossener Wechselrichter derart einwirkt, dass diese ihre Einspeiseleistung jeweils auf das geforderte Maß reduzieren. Dabei erfolgt die Einwirkung der Power Reducer Box auf die Wechselrichter über Signalleitungen, die parallel zu den Leistungsstromleitungen von den einzelnen Wechselrichtern zu einem Übergabepunkt der elektrischen Leistung an das Wechselstromnetz verlegt sind. Der Aufwand für diese zusätzliche Verkabelung ist nicht unerheblich und kann insbesondere bei räumlich weit verteilten Wechselrichtern eine erhebliche Kostengrößenordnung in Relation zur Einspeiseleistung haben.

Aus der DE 10 2004 025 923 A1 ist eine Photovoltaikanlage zur Einspeisung in ein elektrisches Wechselstromnetz mit mehreren Wechselrichtern bekannt, die durch einen Kommunikationsbus datentechnisch untereinander verbunden sind. Dabei ist ein zentrales Steuer- und Überwachungsgerät vorgesehen, welches gleichfalls mit dem Kommunikationsbus verbunden ist. Dieses Steuer- und Überwachungsgerät dient zur Steuerung und Überwachung der Solannrechselrichter und weist eine Netzüberwachungseinrichtung auf, welche die Solarwechselrichter bei Nichteinhaltung vorgebbarer Netzüberwachungskriterien zumindest zeitweise abschaltet. Der Vorteil des Steuer- und Überwachungsgeräts soll darin liegen, dass ausschließlich dieses die Netzüberwachung übemimmt und hierdurch eine gegenseitige Beeinflussung der sonst modularen Solarwechselrichter mit je einer eigenen Netzüberwachungseinrichtung vermieden wird. In der Folge sollen unnötige Abschaltungen einzelner Solarwechselrichter vermieden werden können. Bei den Netzüberwachungskriterien handelt es sich beispielsweise um den Netzspannungsbereich, den Netzfrequenzbereich und den Impedanzsprung. Weiterhin wird die Begrenzung der Schieflast zwischen den Phasen eines dreiphasigen Wechselstromnetzes erwähnt.

Aus der WO 2008/138288 A1 ist es bekannt, bei einem Wechselrichter zur Einspeisung von elektrischer Energie in ein Wechselstromnetz, der eingangsseitig mit einer Energiequelle verbindbar ist, eine Datenverbindung zu einem Datennetzwerk vorzusehen, an dem eine Vielzahl weiterer Wechselrichter mit weiteren Energiequellen zur Einspeisung elektrischer Energie in das Wechselstromnetz angeschlossen ist. Das Datennetzwerk mit den Wechselrichtem bildet eine Kommunikationseinheit, wobei über die Datenverbindungen Steuerkommandos und Parameteränderungen an die Wechselrichter gesendet werden können. So können durch das Anschließen des Datennetzwerks an eine übergeordnete Steuerung Sollwerte zu den Wechselrichtern gesendet werden, um die mit den Wechselrichtern eingespeiste elektrische Energie an aktuelle Anforderungen anzupassen. Die Datenverbindungen können durch bekannte drahtlose Übertragungstechniken, wie ISM-Funk, Bluetooth/W-LAN. ZigBee, Z-Wave, NanoNet und EnOcean realisiert werden. Die Datenverbindungen können auch teilweise oder ganz als drahtgebundene Verbindungen ausgeführt sein. Dabei kann die Vernetzung der Wechselrichter z. B. auf RS485-, Ethernet- oder CAN-Technologie basieren.

Ein Verfahren mit den Schritten des Oberbegriffs des unabhängigen Patentanspruchs 1 und eine Vorrichtung mit den Merkmalen des Oberbegriffs des unabhängigen Patentanspruchs 7 sind aus der US 2007/0135970 A1 bekannt. Hier wird an einem Netzübergabepunkt der Phasenwinkel des Wechselstromnetzes bestimmt und hieraus ein gewünschter Phasenwinkel für einen über den Netzübergabepunkt in das Wechselstromnetz von Photovoltaikwechselrichtern einzuspeisenden Wechselstrom bestimmt. Dieser Wert wird den über mehrere Gebäude verteilten Solarwechselrichtern über eine uni- oder bidirektionale Datenübertragungsstrecke übermittelt. An dem Netzübertragungspunkt ist auch ein Netzschalter vorgesehen.

### AUFGABE DER ERFINDUNG

Der Erfindung liegt die Aufgabe zugrunde, ein Verfahren mit Schritten des Oberbegriffs des unabhängigen Patentanspruchs 1 und eine Vorrichtung mit den Merkmalen des Oberbegriffs des unabhängigen Patentanspruchs 8 aufzuzeigen, mit denen ohne großen Verkabelungsaufwand in Bezug auf Signalleitungen zwischen einem Übergabepunkt und einer Mehrzahl von räumlich verteilten, an der Einspeisung elektrischer Energie beteiligten Wechselrichtern für die Einhaltung von Soll-Werten verschiedene Parameter der eingespeisten elektrischen Energie derart zuverlässig an dem Übergabepunkt Sorge getragen wird, dass den hohen Zuverlässigkeitsanforderungen der Betreiber von Wechselstromnetzen Genüge getan wird. Dies ist beispielsweise mit einfachen Funknetzverbindungen nach dem Bluetooth-Standard zwischen einer Vorrichtung am Übergabepunkt und den einzelnen Wechselrichtern zur Übermittlung von Befehlen an die einzelnen Wechselrichter nicht möglich.

### LÖSUNG

Die Aufgabe der Erfindung wird durch ein Verfahren mit den Schritten des unabhängigen Patentanspruchs 1 und eine Vorrichtung mit den Merkmalen des unabhängigen Patentanspruchs 7 gelöst. Bevorzugte Ausführungsformen des neuen Verfahrens und der neuen Vorrichtung sind in den abhängigen Patentansprüchen definiert.

### BESCHREIBUNG DER ERFINDUNG

Bei dem neuen Verfahren werden die an dem zentralen Übergabepunkt generierten Befehle an die Wechselrichter, um mindestens einen Soll-Wert für einen physikalischen Parameter der eingespeisten elektrischen Energie einzuhalten, von dem Übergabepunkt aus drahtlos an die Wechselrichter übertragen. Um die daraus resultierenden Unsicherheiten zu beherrschen, wird die Einhaltung des Soll-Werts überwacht. Soweit dabei eine Nichteinhaltung des Soll-Werts festgestellt wird, wird die Einspeisung elektrischer Energie notfalls völlig unterbrochen, indem an dem Übergabepunkt eine Leitungstrennung erfolgt. D. h., das neue Verfahren stellt durch Maßnahmen am Übergabepunkt sicher, dass nur dann elektrische Energie an dem Übergabepunkt eingespeist wird, wenn diese elektrische Energie alle vorgegebenen Soll-Werte erfüllt. Kommt es beispielsweise dazu, dass die von dem Übergabepunkt aus drahtlos an einen Wechselrichter gesandten Befehle dort nicht ordnungsgemäß empfangen werden, so wird dies am Übergabepunkt z. B. durch Messen des Ist-Werts des jeweiligen Parameters oder anhand von von den Wechselrichtern an den Übergabepunkt übermittelten Betriebsdaten oder dadurch festgestellt, dass die Wechselrichter den Empfang der Befehle nicht quittieren oder deren Ausführung nicht bestätigen. Zur Kompensation kann der Befehl wiederholt werden oder an einen oder mehrere andere Wechselrichter ein Befehl gegeben werden, dessen Ausführung unabhängig von dem den ursprünglichen Befehl nicht ausführenden Wechselrichter dazu führt, dass der Soll-Wert eingehalten wird. Wenn auch dies nicht gelingt, besteht immer die Möglichkeit, die Einspeisung elektrischer Energie durch die Leitungstrennung an dem Übergabepunkt und damit ohne zwischengeschaltete Funkstrecken zu unterbrechen. Diese Unterbrechungen sind jedoch unwahrscheinlich, und die mit ihnen verbundenen Fehlzeiten bei der Einspeisung elektrischer Energie werden in jedem Fall kurz bleiben. So bleiben auch die resultierenden Mindereinnahmen wegen nicht eingespeister elektrischer Energie klein und zehren kaum an den Einsparungen durch den Verzicht auf Signalleitungen zwischen dem Übergabepunkt und den einzelnen Wechselrichtern.

Bei dem neuen Verfahren ist der mindestens eine Soll-Wert veränderlich, und er wird von einem Betreiber des Wechselstromnetzes variabel vorgegeben. Dabei reicht es, den Soll-Wert an dem Übergabepunkt zu empfangen und dort Befehle an die einzelnen Wechselrichter zu generieren. Diese Befehle können im Einzelfall schlichtweg den aktuellen Soll-Werte an die Steuerungen der einzelnen Wechselrichter übermitteln. Mit den Befehlen kann aber auch direkt auf die Steuerung der einzelnen Wechselrichter eingewirkt werden, um die Einhaltung des jeweiligen Soll-Werts herbeizuführen.

Das neue Verfahren ist sehr gut für solche veränderlichen Soll-Werte geeignet, die mittels eines Rundsteuersignals vorgegeben werden. Ein solches Rundsteuersignal wird dann an dem Übergabepunkt empfangen. Dazu kann ein Rundsteuersignalempfänger Verwendung finden, der das Rundsteuersignal registriert, welches von dem Betreiber über die Leitungen des Wechselstromnetzes ausgesandt wird. Dabei kann dieser Rundsteuersignalempfänger ganz konkret ein solcher sein, wie er von dem Betreiber des Wechselstromnetzes zur Verfügung gestellt wird.

Der Parameter, dessen Einhaltung mit dem neuen Verfahren bewirkt wird, kann die Einspeiseleistung sein, die von dem Betreiber des Wechselstromnetzes vorübergehend beschränkt wird, oder eine im Wechselstromnetz vorliegende und zu kompensierende Schieflast, ein von cos phi = 1 abweichender Leistungsfaktor, der von dem Betreiber des Wechselstromnetzes zur Kompensation von Blindleistungen angefordert wird, oder auch die Netzfrequenzen des Wechselstromnetzes. Bei Überwachung der Netzfrequenz kann z. B. eine Inselbildung registriert werden, bei der der Übergabepunkt zu einem Teil des Wechselstromnetzes gehört, der gezielt von dessen Rest abgetrennt wurde, um dort beispielsweise Arbeiten an dem Wechselstromnetz vorzunehmen. In diesem Fall ist die Netzfrequenz in dem abgetrennten Teil des Wechselstromnetzes nicht stabilisiert und wird von den Wechselrichtern z. B. in die Höhe getrieben. Der resultierende Frequenzanstieg kann als Signal verwendet werden, um die Einspeisung am Übergabepunkt sofort zu beenden, damit der abgetrennte Teil des Wechselstromnetzes tatsächlich wie gewünscht spannungsfrei wird.

Es wurde bereits angesprochen, dass die Unterbrechung der Einspeiseleistung durch Leitungstrennung nicht sofort erfolgen muss, sondern dass zuvor Korrekturversuche unternommen werden können. Die Art und Weise dieser Korrekturversuche können insbesondere davon abhängig gemacht werden, ob an dem Übergabepunkt Befehlsempfangsbestätigungssignale von den einzelnen Wechselrichtern empfangen wurden oder nicht. So bedeutet es sicher grundsätzlich etwas anderes, ob alle Wechselrichter den Empfang der vom Übergabepunkt aus ausgesandten Befehle quittiert haben und der Soll-Wert an dem Übergabepunkt trotzdem nicht eingehalten wird, oder ob entsprechende Befehlsempfangsbestätigungssignale nicht eingehen und dasselbe Nichteinhalten des Soll-Werts festgestellt werden.

Umgekehrt kann die Unterbrechung der Einspeiseleistung durch Leitungstrennung auch sofort erfolgen, wenn nicht alle oder zumindest nicht die meisten Wechselrichter den Empfang der vom Übergabepunkt aus ausgesandten Befehle quittieren, weil dies ein starkes Indiz dafür ist, dass die Wechselrichter diese Befehle nicht ausführen werden und der damit umzusetzende Soll-Wert entsprechend nicht eingehalten werden kann.

Die erfindungsgemäße Vorrichtung zur Einhaltung mindestens eines Soll-Werts für einen physikalischen Parameter von elektrischer Energie, die an einem Übergabepunkt in ein Wechselstromnetz, insbesondere nach den neuen Verfahren, eingespeist wird, weist neben einer Prozessoreinrichtung zum Generieren von Befehlen an parallel geschaltete Wechselrichter, über die die Energie von Energiequellen an den Übergabepunkt fließt, um den Soll-Wert des Parameters einzuhalten, eine Sendeeinrichtung zum drahtlosen Übertragen der Befehle an die Wechselrichter und einen Netzschalter am Übergabepunkt auf, um bei Nichteinhaltung des Soll-Werts die Einspeisung elektrischer Energie durch Leitungstrennung an dem Übergabepunkt zu unterbrechen.

Insbesondere weist die neue Vorrichtung einen Empfänger für den Soll-Wert auf, damit dieser, beispielsweise von einem Betreiber des Wechselstromnetzes, variabel vorgegeben werden kann. Bei diesem Empfänger kann es sich um einen sogenannten Rundsteuersignalempfänger handeln.

Weiterhin ist die Sendeeinrichtung der neuen Vorrichtung vorzugsweise Teil einer Sende- und Empfangseinrichtung zur wechselseitigen Kommunikation mit den Wechselrichtern. Dabei kann die Sendeeinrichtung insbesondere so ausgebildet sein, dass sie mit den Wechselrichtern ein Kommunikationsnetz nach dem Bluetooth-Standard ausbildet.

Vorzugsweise weist die neue Vorrichtung eine Messeinrichtung zum Messen des Ist-Werts des Parameters an dem Übergabepunkt auf, um die Einhaltung des Soll-Werts unmittelbar selbst zu erfassen.

Zusätzlich kann die neue Vorrichtung Protokolliereinrichtungen für die eingespeiste elektrische Energie, beispielsweise in Form eines Stromzählers umfassen. Die neue Vorrichtung kann demnach alle Einrichtungen, die auch üblicherweise an einem Übergabepunkt zur Einspeisung elektrischer Energie in ein Wechselstromnetz vorgesehen sind, umfassen.

Dabei können alle diese Bestandteile der Vorrichtung in einem einzigen Gehäuse angeordnet sein und dieses Gehäuse kann versiegelt sein, um die Funktion der Vorrichtung in einer bestimmten Konfiguration, d. h. mit bestimmten Komponenten und Einstellungen, sicherzustellen. In dieser Konfiguration ist die Vorrichtung vorzugsweise von dem Betreiber des Wechselstromnetzes im Hinblick auf die Einhaltung des mindestens einen Parameters und ggf. auch der Protokollierung der eingespeisten elektrischen Energie zertifiziert. Dabei bedeutet dies selbst dann, wenn diese Zertifizierung an jeder einzelnen Vorrichtung vorgenommen wird, eine erhebliche Einsparung gegenüber der Zertifizierung der gesamten Anlage einschließlich der Wechselrichter vor Ort durch den Betreiber des Wechselstromnetzes. Insbesondere erscheint es bei der neuen Vorrichtung aber auch möglich, diese als standardisierten Typ zu zertifizieren, der dann in Kombination mit einer beliebigen Anzahl und Konstellation von Wechselrichtern und daran angeschlossenen Energiequellen betrieben werden kann, ohne dass die Einhaltung der relevanten Parameter der eingespeisten elektrischen Energie nicht mehr sichergestellt ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale, für weitere Ausführungsformen der Erfindung entfallen.

### KURZBESCHREIBUNG DER FIGUREN

Die Erfindung wird im Folgenden unter Bezugnahme auf die beigefügte Zeichnung näher erläutert und beschrieben.

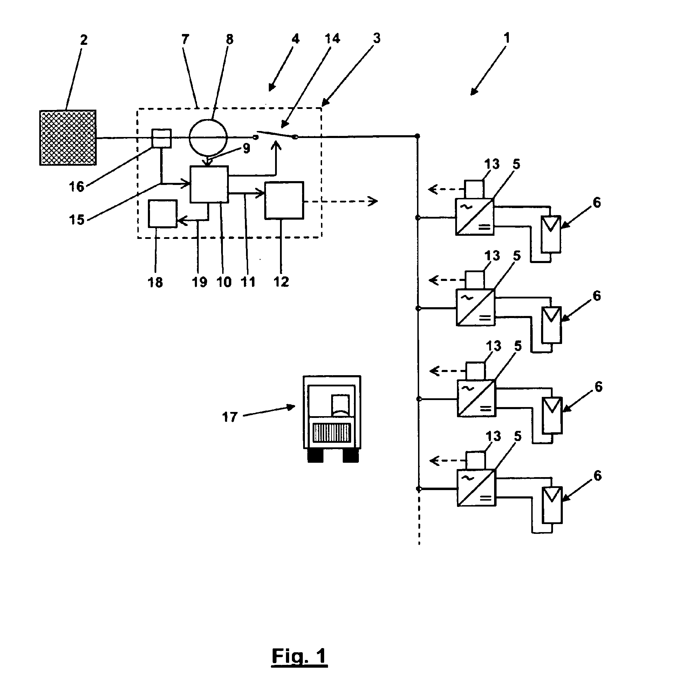

- **Fig.1**: skizziert die Verwendung einer Ausführungsform der neuen Vorrichtung zur Durchführung des neuen Verfahrens.

In Fig.1 ist eine Photovoltaikanlage 1 skizziert, mit der elektrische Energie in ein Wechselstromnetz 2 eingespeist wird. Dabei erfolgt die Einspeisung über eine Vorrichtung 3, die an einem Übergabepunkt 4 von der Photovoltaikanlage 1 zu dem Wechselstromnetz 2 vorgesehen ist. An dem Übergabepunkt 3 wird die elektrische Energie von einer Mehrzahl von parallel geschalteten Wechselrichtern 5 in das Wechselstromnetz 2 eingespeist. Dabei ist die Darstellung gemäß Fig. 1 zwischen den Wechselrichtern 5 und dem Wechselstromnetz 2 ein Einlinienschaltbild. Das Wechselstromnetz 2 kann aber nicht nur ein einphasiges Wechselstromnetz sondern auch ein dreiphasiges Wechselstromnetz sein, wobei im letzteren Fall die einzelnen Wechselrichter 5 jeweils in eine Phase oder in alle Phasen des Wechselstromnetzes 2 einspeisen können. Fig. 1 zeigt fünf Wechselrichter 5. Deren Zahl kann aber auch deutlich größer sein. Fig. 1 zeigt auch, dass an jedem Wechselrichter nur ein Photovoltaikmodul 6 angeschlossen ist, obwohl tatsächlich jeder Wechselrichter 5 typischerweise aus mehreren parallel geschalteten Strings aus jeweils mehreren in Reihe geschalteten Photovoltaikmodulen 6 gespeist wird. Die Wechselrichter 5 sind untereinander parallel geschaltet. Sie synchronisieren sich automatisch mit dem Wechselstromnetz 2 und schalten sich diesem zu, sobald die aus den Photovoltaikmodulen 6 zur Verfügung stehende Leistung am Morgen ausreichend ist. Am Abend erfolgt entsprechend eine Abschaltung der Wechselrichter 5. Die Vorrichtung 3 umfasst innerhalb eines durch eine gestrichelte Linie angedeuteten Gehäuses 7 eine Messeinrichtung 8, die mindestens den Ist-Wert 9 eines relevanten Parameters der an dem Übergabepunkt 4 in das Wechselstromnetz 2 eingespeisten elektrischen Energie misst, und eine Prozessoreinrichtung 10, die diesen Ist-Wert 9 mit einem vorgegebenen Soll-Wert vergleicht und zumindest im Falle einer Abweichung Befehle 11 an die Wechselrichter 5 generiert, die von einer Sende- und Empfangseinrichtung 12 drahtlos an die Wechselrichter 5 übermittelt werden. Dabei bildet die Sende- und Empfangseinrichtung 12 mit entsprechenden Sende- und Empfangseinrichtungen 13 der Wechselrichter 5 ein drahtloses Kommunikationsnetz nach dem Bluetooth-Standard aus. Wenn es der Prozessoreinrichtung 10 auf diese Weise auch nach Wiederholung und/oder der Ausgabe geänderter Befehle 11 nicht gelingt, den von der Messeinrichtung 8 gemessenen Ist-Wert 9 auf den Soll-Wert zu bringen, öffnet die Prozessoreinrichtung 10 einen Netzschalter 14 und beendet damit die Einspeisung weiterer elektrischer Energie an dem Übergabepunkt 4. Bei dem Soll-Wert, mit dem der Ist-Wert 9 verglichen wird, kann es sich insbesondere um einen Soll-Wert 15 handeln, der von einem Rundsteuersignalempfänger 16 der Vorrichtung 3 empfangen und an die Prozessoreinrichtung 10 übermittelt wird. Beispielsweise kann der Sollwert ein maximaler Prozentsatz der nominellen Einspeiseleistung der Photovoltaikanlage 1 sein, der als Einspeiseleistungsbegrenzungssignal über das Wechselstromnetz 2 an alle angeschlossenen Einspeiser von elektrischer Energie übermittelt wird. Wenn ein derartiges Einspeiseleistungsbegrenzungssignal ausgesandt wird, bedeutet dies, dass der einzuhaltende Maximalwert der an dem Übergabepunkt 4 eingespeisten elektrischen Energie auf einen gegenüber der aktuellen Einspeisung möglicherweise deutlich reduzierten Wert abgesenkt werden muss. Dies kommuniziert die Prozessoreinrichtung mit Hilfe der Befehle 11 an die Wechselrichter 5, von denen möglichst jeder seine Einspeiseleistung entsprechend reduziert. Dabei mag es aufgrund einer großflächigen räumlichen Verteilung der Wechselrichter 5 und zwischen Ihnen und der Vorrichtung 3 auch vorübergehend auftretender Hindernisse, hier in Form eines Lkw 17 skizziert, dazu kommen, dass nicht alle Wechselrichter 5 die Befehle 11 erhalten. Dies kann durch eine Wiederholung der Befehle 11 oder eine Modifikation der Befehle 11, so dass andere Wechselrichter 5 ihre Einspeiseleistung noch weiter reduzieren, kompensiert werden. Gelingt dies aber binnen vorgegebener Zeit nicht, so öffnet die Prozessoreinrichtung 10 den Netzschalter 14. Damit wird dann gar keine elektrische Energie mehr in das Wechselstromnetz 2 eingespeist. Auf diese Weise wird aber der Soll-Wert der reduzierten Einspeiseleistung in jedem Fall eingehalten. Darüber hinaus umfasst die Vorrichtung 3 eine Protokolliereinrichtung 18, die die an dem Übergabepunkt 4 in das Wechselstromnetz 2 eingespeiste elektrische Leistung 19 protokolliert und darüber hinaus auch die Einhaltung des Sollwerts dokumentieren kann. Da die Vorrichtung 3 mit dem Rundsteuersignalempfänger 16 und insbesondere der Protokolliereinrichtung 18 sensible Einrichtungen in Bezug auf die Vergütung des Betreibers der Photovoltaikanlage 1 durch den Betreiber des Wechselstromnetzes 2 enthält, kann das Gehäuse 7 insgesamt versiegelt sein, nachdem die Vorrichtung 3 geeicht und/oder durch den Betreiber des Wechselstromnetzes 2 zertifiziert wurde. Aufgrund ihres definierten Aufbaus, unabhängig von der Anzahl und der räumlichen Verteilung der angeschlossenen Wechselrichter 5, ist auch eine Typenzertifizierung der Vorrichtung 3 möglich.

### BEZUGSZEICHENLISTE

- 1: Photovoltaikanlage
- 2: Wechselstromnetz
- 3: Vorrichtung
- 4: Übergabepunkt
- 5: Wechselrichter
- 6: Photovoltaikmodul
- 7: Gehäuse
- 8: Messeinrichtung
- 9: Ist-Wert
- 10: Prozessoreinrichtung
- 11: Befehl
- 12: Sende- und Empfangseinrichtung
- 13: Sende- und Empfangseinrichtung
- 14: Netzschalter
- 15: Soll-Wert
- 16: Rundsignalempfänger
- 17: Lkw
- 18: Protokolliereinrichtung
- 19: eingespeiste Energie

## Patentansprüche

1. Verfahren zur Einspeisung elektrischer Energie von mehreren räumlich verteilt angeordneten Energiequellen über mehrere ebenfalls räumlich verteilt angeordnete und parallel geschaltete Wechselrichter (5) in ein Wechselstromnetz (2), wobei an einem zentralen Übergabepunkt (4) Befehle (11) an die Wechselrichter (5) generiert werden, um mindestens einen Soll-Wert (15) für einen physikalischen Parameter der eingespeisten elektrischen Energie einzuhalten, wobei die Befehle (11) von dem Übergabepunkt (4) aus drahtlos an die Wechselrichter (5) übertragen werden, **dadurch gekennzeichnet, dass** bei Nichteinhaltung des Soll-Werts (15) die Einspeisung elektrischer Energie durch Leitungstrennung an dem Übergabepunkt (4) unterbrochen wird und dass der Soll-Wert (15) veränderlich ist und von einem Betreiber des Wechselstromnetzes (2) variabel vorgegeben wird.

2. Verfahren nach Anspruch 1, **dadurch gekennzeichnet, dass** der Soll-Wert (15) mittels eines Rundsteuersignals vorgegeben wird, das an dem Übergabepunkt (4) empfangen wird.

3. Verfahren nach einem der Ansprüche 1 und 2, **dadurch gekennzeichnet, dass** der Parameter die Einspeiseleistung oder die Schieflast oder der Leistungsfaktor der elektrischen Energie oder die Netzfrequenz ist.

4. Verfahren nach einem der Ansprüche 1 bis 3, **dadurch gekennzeichnet, dass** die Einhaltung des Soll-Werts (15) durch Messen des Ist-Werts (9) des Parameters überwacht wird.

5. Verfahren nach Anspruch 4, **dadurch gekennzeichnet, dass** die Einhaltung des Soll-Werts (15) durch Messen des Ist-Werts (9) des Parameters an dem zentralen Übergabepunkt (4) überwacht wird.

6. Verfahren nach einem der Ansprüche 1 bis 5, **dadurch gekennzeichnet, dass** vor dem Unterbrechen der Einspeiseleistung dieselben und/oder modifizierte Befehle (11) von dem Übergabepunkt (4) an die Wechselrichter (5) übertragen werden.

7. Vorrichtung (3) zur Einhaltung mindestens eines Sollwerts (15) für einen physikalischen Parameter von elektrischer Energie, die an einem Übergabepunkt (4) in ein Wechselstromnetz (2), gemäß dem Verfahren nach einem der vorangehenden Ansprüche, eingespeist wird, mit einer Prozessoreinrichtung (10) zum Generieren von Befehlen (11) an untereinander parallel geschaltete Wechselrichter (5), über die die elektrische Energie von Energiequellen an den Übergabepunkt (4) fließt, um den Soll-Wert (15) des Parameters einzuhalten, mit einer Sendeeinrichtung (12) zum drahtlosen Übertragen der Befehle (11) an die Wechselrichter (5) und mit einem Netzschalter (14) am Übergabepunkt (4), **dadurch gekennzeichnet, dass** ein Empfänger zum Empfangen des Soll-Werts (15), der veränderlich ist und von einem Betreiber des Wechselstromnetzes (2) variabel vorgegeben wird, vorgesehen ist und dass die Prozessoreinrichtung (10) bei Nichteinhaltung des Soll-Werts (15) die Einspeisung elektrischer Energie durch Leitungstrennung mit dem Netzschalter (14) an dem Übergabepunkt (4) unterbricht.

8. Vorrichtung nach Anspruch 7, **dadurch gekennzeichnet, dass** die Sendeeinrichtung Teil einer Sende- und Empfangseinrichtung (12) zur wechselseitigen Kommunikation mit den Wechselrichtern (5) ist.

9. Vorrichtung nach einem der Ansprüche 7 und 8, **gekennzeichnet durch** eine Messeinrichtung (8), zum Messen des Ist-Werts (9) des Parameters an dem Übergabepunkt (4).

10. Vorrichtung nach einem der Ansprüche 7 bis 9, **gekennzeichnet durch** eine Protokolliereinrichtung (18) für die eingespeiste elektrische Energie.

11. Vorrichtung nach einem der Ansprüche 7 bis 10, **dadurch gekennzeichnet, dass** alle Bestandteile der Vorrichtung (3) in einem Gehäuse (7) angeordnet sind.

12. Vorrichtung nach Anspruch 11, **dadurch gekennzeichnet, dass** das Gehäuse (7) versiegelt ist.

13. Vorrichtung nach einem der Ansprüche 7 bis 12, **dadurch gekennzeichnet, dass** die Vorrichtung (3) zertifiziert ist.

## Claims

1. Method of feeding electric energy from a plurality of spatially distributed energy sources via a plurality of also spatially distributed inverters (5) connected in parallel into an AC power grid (2), wherein commands (11) to the inverters (5) are generated at a central transfer point (4) to meet at least one target value (15) for a physical parameter of the electric energy fed, wherein the commands (11) are wirelessly transmitted to the inverters (5), **characterised in that** the feeding of electric energy is interrupted by line disconnection at the transfer point (4) if the target value (15) is not met, and that the target value (15) is variable and is variably specified by an operator of the AC power grid (2).

2. Method of claim 1, **characterised in that** the target value (15) is specified by means of a ripple control signal which is received at the transfer point (4).

3. Method of any of the claims 1 and 2, **characterised in that** the parameter is the feeding power or the unbalanced load or the power factor of the electric energy or the grid frequency.

4. Method of any of the claims 1 to 3, **characterised in that** meeting the target value (15) is monitored by measuring the actual value (9) of the parameter.

5. Method of claim 4, **characterised in that** meeting the target value (15) is monitored by measuring the actual value (9) of the parameter at the central transfer point (4).

6. Method of any of the claims 1 to 5, **characterised in that** prior to interrupting the feeding power the same and/or modified commands (11) are transmitted from the transfer point (4) to the inverters (5).

7. Apparatus (3) for meeting at least one target value (15) for a physical parameter of electric energy which is fed into an AC power grid (2) at a transfer point (4) according to the method of any of the preceding claims, the apparatus (3) comprising a processor device (10) for generating commands (11) to inverters (5) connected in parallel to each other via which electric energy flows from energy sources to the transfer point (4) to keep the target value (15) of the parameter, a transmitting device (12) for wirelessly transmitting the commands (11) to the inverters (5), and a grid switch (14) at the transfer point (4), **characterised in that** a receiver for receiving the target value (15) which is variable and which is variably specified by an operator of the AC power grid (2) is provided, and **in that** the processor device (10) interrupts the feeding of electric energy by line interruption by the grid switch (14) at the transfer point (4), if the target value (15) is not met.

8. Apparatus of claim 7, **characterised in that** the transmitting device is part of a receiving and transmitting device (12) for bidirectional communication with the inverters (5).

9. Apparatus of any of the claims 7 and 8, **characterised by** a measuring device (8) for measuring the actual value (9) of the parameter at the transfer point (4).

10. Apparatus of any of the claims 7 to 9, **characterised by** a recording device (18) for the electric energy fed.

11. Apparatus of any of the claims 7 to 10, **characterised in that** all parts of the apparatus (3) are arranged in a housing (7).

12. Apparatus of claim 11, **characterised in that** the housing (7) is sealed.

13. Apparatus of any of the claims 7 to 12, **characterised in that** the apparatus (3) is certified.

## Revendications

1. Procédé pour alimenter un réseau de courant alternatif (2) en énergie électrique, issue de plusieurs sources d'énergie réparties dans l'espace, via plusieurs onduleurs (5) montés en parallèle et également répartis dans l'espace, des instructions (11) étant générées au niveau d'un point de transfert (4) central vers les onduleurs (5) afin de respecter au moins une valeur de consigne (15) pour un paramètre physique de l'énergie électrique alimentant ledit réseau, lesdites instructions (11) étant transmises sans fil depuis le point de transfert (4) vers les onduleurs (5), **caractérisé en ce qu'**en cas de non-respect de la valeur de consigne (15), l'alimentation en énergie électrique est interrompue par une coupure de ligne au niveau du point de transfert (4) et **en ce que** la valeur de consigne (15) est variable et est fixée de manière variable par un exploitant du réseau de courant alternatif (2).

2. Procédé selon la revendication 1, **caractérisé en ce que** la valeur de consigne (15) est fixée au moyen d'un signal centralisé, qui est reçu au niveau du point de transfert (4).

3. Procédé selon les revendications 1 et 2, **caractérisé en ce que** le paramètre est la puissance d'alimentation ou le déséquilibre ou le facteur de puissance de l'énergie électrique ou la fréquence du réseau.

4. Procédé selon l'une quelconque des revendications 1 à 3, **caractérisé en ce que** le respect de la valeur de consigne (15) est contrôlé au moyen de la mesure de la valeur réelle (9) du paramètre.

5. Procédé selon la revendication 4, **caractérisé en ce que** le respect de la valeur de consigne (15) est contrôlé au moyen de la mesure de la valeur réelle (9) du paramètre au niveau du point de transfert (4) central.

6. Procédé selon l'une quelconque des revendications 1 à 5, **caractérisé en ce qu'**avant la coupure de la puissance d'alimentation, les mêmes instructions (11) et/ou des instructions (11) modifiées sont transmises depuis le point de transfert (4) vers les onduleurs (5).

7. Dispositif (3) permettant de respecter au moins une valeur de consigne (15) pour un paramètre physique de l'énergie électrique alimentant un réseau de courant alternatif (2) au niveau d'un point de transfert (4) selon le procédé selon l'une quelconque des revendications précédentes, comportant un processeur (10) destiné à générer des instructions (11) destinées à des onduleurs (5) montés en parallèle entre eux, via lesquels l'énergie électrique issue des sources d'énergie afflue vers le point de transfert (4) afin de respecter la valeur de consigne (15) du paramètre, comportant un émetteur (12) pour la transmission sans fil des instructions (11) vers les onduleurs (5) et comportant un commutateur d'alimentation (14) au niveau du point de transfert (4), **caractérisé en ce qu'**il est prévu un récepteur destiné à recevoir la valeur de consigne (15), qui est variable et qui est fixée de manière variable par un exploitant du réseau de courant alternatif (2), et **en ce que** le processeur (10), en cas de non-respect de la valeur de consigne (15), interrompt l'alimentation en énergie électrique par une coupure de ligne au moyen du commutateur d'alimentation (14) au niveau du point de transfert (4).

8. Dispositif selon la revendication 7, **caractérisé en ce que** l'émetteur est une partie d'un système d'émetteur et récepteur (12) pour la communication bidirectionnelle alternée avec les onduleurs (5).

9. Dispositif selon les revendications 7 et 8, **caractérisé par** un dispositif de mesure (8) destiné à mesurer la valeur réelle (9) du paramètre au niveau du point de transfert (4).

10. Dispositif selon l'une quelconque des revendications 7 à 9, **caractérisé par** un dispositif d'enregistrement (18) pour l'énergie électrique alimentant ledit réseau.

11. Dispositif selon l'une quelconque des revendications 7 à 10, **caractérisé en ce que** toutes les parties intégrantes du dispositif (3) sont disposés dans un boîtier (7).

12. Dispositif selon la revendication 11, **caractérisé en ce que** le boîtier (7) est scellé.

13. Dispositif selon l'une quelconque des revendications 7 à 12, **caractérisé en ce que** le dispositif (3) est certifié.
